# EUROPEAN PATENT APPLICATION

(11) **EP 0 601 251 A1**
(43) Date of publication of application: **15.06.1994**
(21) Application number: 92311361.7
(22) Date of filing: 11.12.1992
(51) Int. Cl.: G01G 19/41, G01G 23/20

(54) **A weighing scale**

(71) Applicant: HANSON INDUSTRIES LIMITED, Sligo (IE)
(72) Inventor: Stephens, Brian, Dun Laoghaire, County Dublin (IE)
(74) Representative: Johnson, Terence Leslie

(57) **Abstract**

The invention relates to a weighing scale 1, particularly a dietary scale for use in the kitche, comprising a body 2 with a compartment 3 adapted to record means 4 for providing dietary information.

The compartment 3 comprises a rebate or recess 5 in the body 2 of generally rectangular configuration whereby it can record the dietary information means, in the form of a plurality of separate cards 4 each bearing dietary information 6, for example for a particular food the amount of energy, calcium, salt or the like per gramme. The compartment 3 may be closed by a closure such as a door 7 hinged to the body 2, which at the front (as viewed and as in use) has a fascia 8 with an elongate slot 9 in it through which is viewed a bar of a member such as a pointer 10 which is used to indicate weight, there being a graduated scale (not shown) adjacent the slot 9. The compartment 3 is effectively in the fascia 8.

## Description

The invention relates to a weighing scale, particularly a dietary scale for use in the kitchen and which can be used to monitor a diet.

According to one aspect of the invention there is provided a weighing scale, comprising a body with a compartment adapted to receive means providing dietary information.

The compartment may have a closure. This provides for neat storage of the dietary information means.

The closure may be a hinged part which in a closed position engages the body.

The body may comprise a fascia in which there is an elongate slot through which is visible means for indicating a weight on the scale.

The means may comprise part of an elongate member such as a pointer.

The scale operating mechanism may comprise a parallelogram arrangement.

The scale may comprise a stowable support whereby to support the scale in an operating position.

The stowable support may comprise a strut hingedly mounted on the body.

The scale may include a weighing platform, or pan, which is slidably mounted with part of the operating mechanism.

The weighing platform, or pan, and the said part may have complementary slidably engageable means such as a tongue and groove arrangement.

According to a second aspect of the invention there is provided a dietary system, comprising a scale according to any preceding claim, and a plurality of separate means providing dietary information adapted to be removeably housed in said compartment.

A weighing scale, and a dietary system embodying same, are hereinafter described, by way of example, with reference to the accompanying drawings.

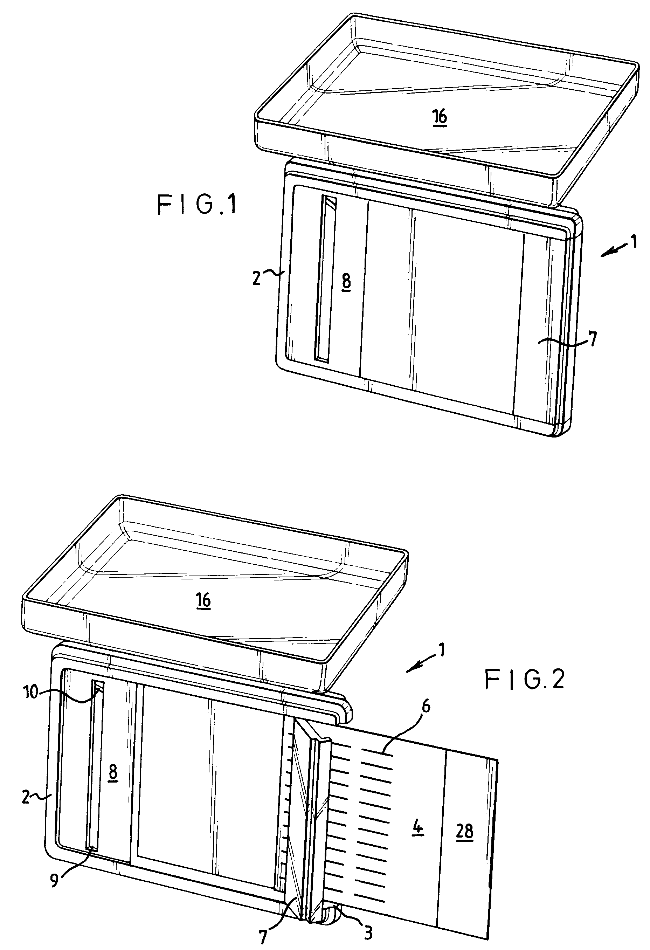

Fig.1 is a perspective view of a dietary weighing scale according to the invention, in a first mode;
Fig.2 shows the scale of Fig.1 in a second mode;
Fig.3 shows a rear perspective view of the dietary scale of Figs. 1 and 2;
Fig.4 shows a side elevational view of the scale of Figs. 1 - 3 in an in use mode;
Fig.5 shows a transverse sectional view of the scale of Figs. 1 - 4;
Fig.6 shows a schematic 'phantom' view of the scale of Figs. 1 - 5 in a stowed or stored position;
Fig. 7 and 8 respectively show schematic 'phantom' views of the scale of Figs. 1 - 6 in an unloaded and a fully loaded condition;

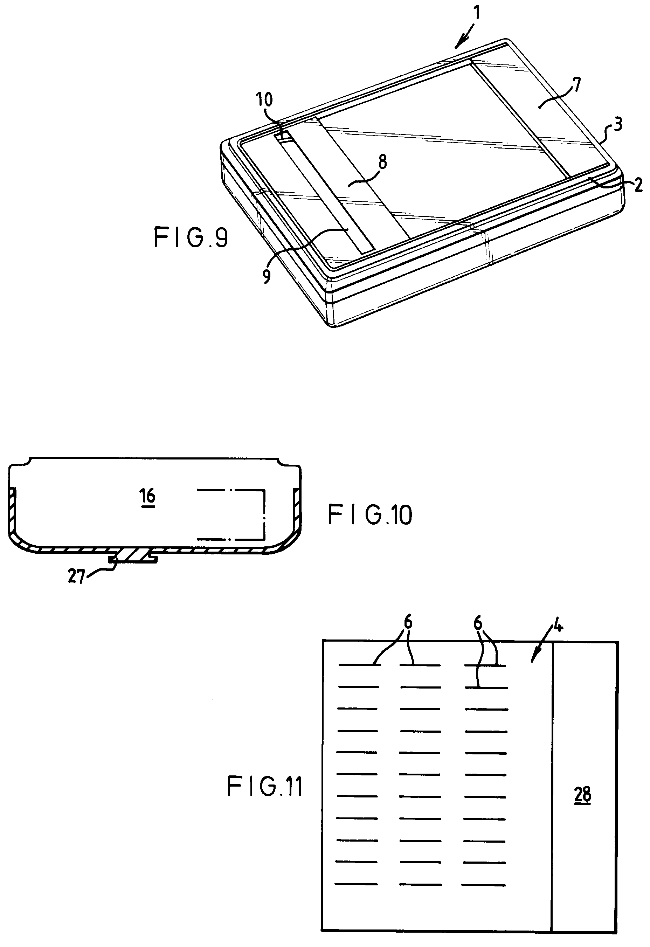

Fig.9 shows a perspective view of the stowed or stored scale of Figs. 1 - 8;
Fig. 10 shows an elevational view of a weighing platform or pan of the scale of Figs 1 - 9; and
Fig. 11 shown a plan view of means for providing dietary information.

Referring to the drawings, there is shown a weighing scale 1, particularly a dietary scale for use in the kitchen, comprising a body 2 with a compartment 3 adapted to receive means 4 for providing dietary information.

The compartment 3 comprises a rebate or recess 5 in the body 2 of generally rectangular configuration whereby it can record the dietary information means, in the form of a plurality of separate cards 4 each bearing dietary information 6, for example for a particular food the amount of energy, calcium, salt or the like per gramme. The compartment 3 may be closed by a closure such as a door 7 hinged to the body 2, which at the front (as viewed and as in use) has a fascia 8 with an elongate slot 9 in it through which is viewed a bar of a member such as a pointer 10 which is used to indicate weight, there being a graduated scale (not shown) adjacent the slot 9. The compartment 3 is effectively in the fascia 8.

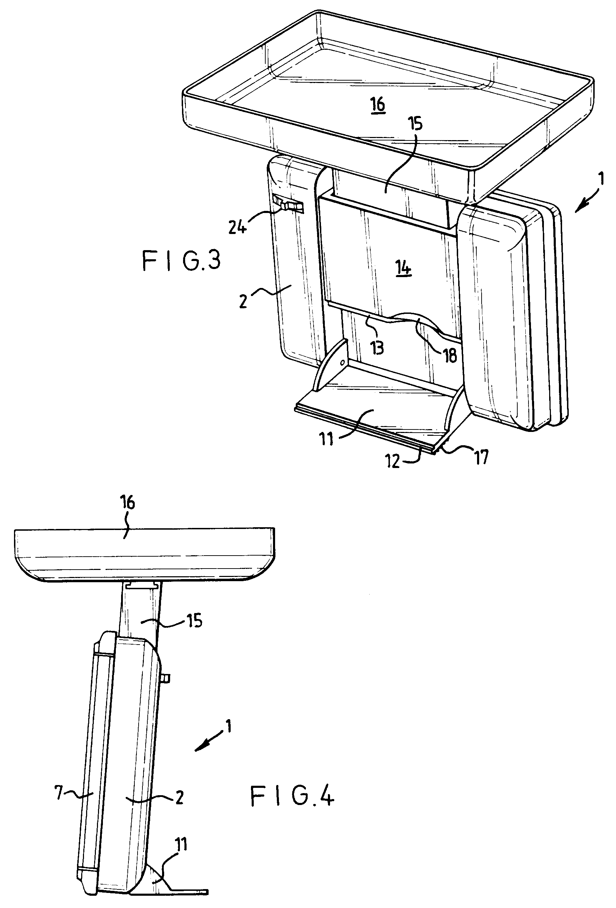

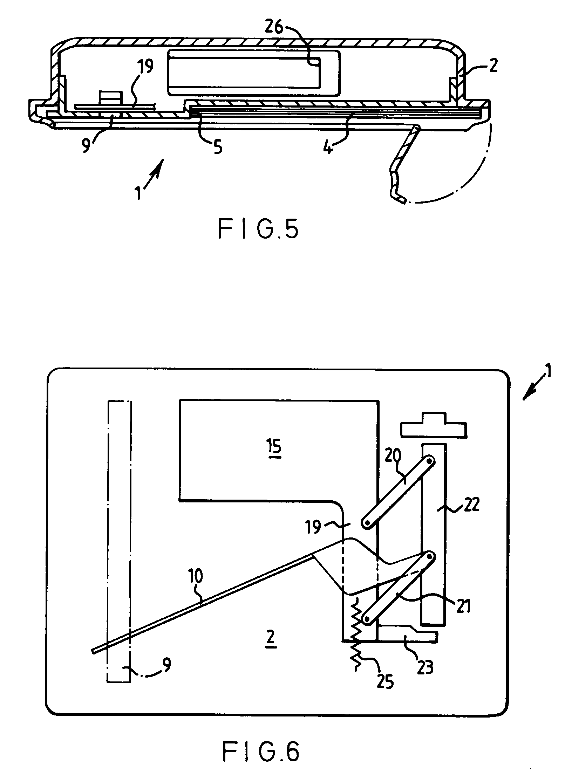

The scale 1 is supported in use by a strut or flap 11 hingedly mounted in the rear (as considered in use) of the scale, the flap 11 having a lip 12 which is received in a rebate 13 of a guide block 14 for a support 15 for a weighing platform or pan 16. The flap 11 has external serrations 17 and the block 14 has a finger or thumb depression 18 so that the upper free (as viewed) edge of the flap 11 can be manually engaged and pivoted down from the stowed position to a use position or mode (Figs. 3, 4).

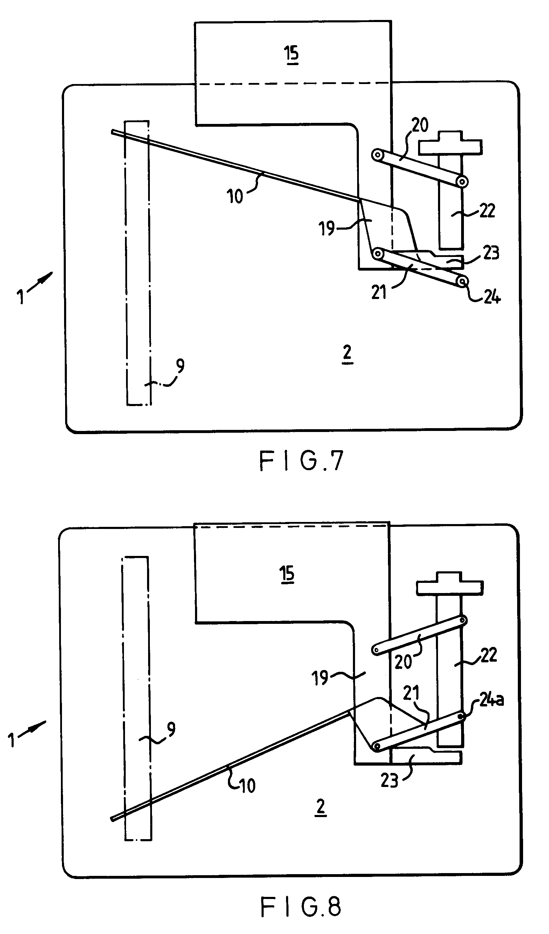

The support 15 for the weighing platform or pan 16 is of generally L-shape (Figs. 6, 7 and 8), a depending, relatively slim leg 19 of the 'L' being pivotably connected with one end of parallel linkage arms 20, 21 which are also pivotably connected at their opposite ends to an extensible or telescopic member 22 which is calibratable to provide a known deflection for a known weight. The member is mounted above lateral extension 23 of the limb 19.

The limb 19, arms 20, 21 and extensible or telescopic member 22 form a parallelogram arrangement which is an operating mechanism of the scale 1. The mechanism can be 'zeroed' by a rotatable knob 24 for adjusting the extensible member so that the pointer 10 is opposite 'zero' on the scale, on the fascia 8 adjacent the aperture 9. The pointer 10 is pivoted to the mechanism at the pivot point 24a connecting the lower linkage arm 21 (as viewed, Figs 6, 7 and 8) to the extensible mechanism 22.

The mechanism may include a spring 25 (Fig. 6) for fine control.

The spring and platform or pan travel is approximately 25mm, though this can be reduced by moving the pointer pivot inboard to a position inside the parallelogram.

The upper (as viewed) end of the support 15 for the weighing platform or pan 16 has an undercut blind groove 26 for receiving in guiding sliding relation a tongue 27 depending from the underside of the platform or pan 16, which is therefore slid into position in a direction generally parallel to the length of the body.

The dietary information means comprises a plurality of cards 4 carrying information such as energy (calories), fibre, calcium etc. per given weight of a particular food. There is a space 28 for indicating the particular food about which information is given on the card.

The scale 1 and cards 4 thus provide a dietary system. In use of the system 1, 4, a user supports the scale by pivoting the flap 11 down to the position shown in Fig.3. The platform or pan 16 is slid into place and the mechanism 22 is zeroed as necessary using knob 24. The closure 7 is then opened an an appropriate card 4 is extracted and the relevant information read therefrom when the food is placed on the platform or pan 16 and weighed, the weight causing the mechanism 22 to operate and move the pointer 10 along the gradation to the particular weight, which is read off by being viewed through slot 9. Alternatively a particular weight of particular food can be ascertained from the relevant card, and the food can be weighed out accurately.

When weighing is complete, the cards 4 are returned to the compartment and the door 7 is closed, suitably by snap engagement of a free end thereof with a corresponding adjacent part of the body. The flap 11 is pivoted up to the stowed position, and the platform or pan is slid off. The support 15 can be retracted entirely into the body 2 to provide a neat pack.

## Claims

1. A weighing scale, comprising a body, characterised by a compartment (3) adapted to receive means (4) providing dietary information.

2. A scale according to Claim 1, characterised by a closure (7).

3. A scale according to Claim 2, characterised by a hinged part which in a closed position engages the body (2).

4. A scale according to any preceding claim, characterised in that the body (2) comprises a fascia (8) in which there is an elongate slot (9) through which is visible means (8) (10) for indicating a weight on the scale.

5. A scale according to Claim 4, characterised by the means (10) comprising part of an elongate pointer member.

6. A scale according to any preceding claim, characterised by an operating mechanism comprising a parallelogram arrangement (20, 21, 22).

7. A scale according to any preceding claimk, characterised by a stowable support (11) whereby to support the scale in an operating position.

8. A scale according to Claim 7, characterised by the stowable support comprising a strut (11, 12) hingedly mounted on the body.

9. A scale according to any preceding claim, characterised by a weighing platform, or pan (16) which is slidably mounted with part (15) of the operating mechanism (20, 21, 22).

10. A scale according to Claim 9, characterised by the weighing platform, or pan (16) and the said part (15) comprising complementary slidably engageable means (17).

11. A dietary system, characterised by a scale (1) according to any preceding claim, and a plurality of separate means (4) providing dietary information adapted to be removably housed in said compartment.
